Europäisches Patentamt

European Patent Office

Office européen des brevets

(11) Veröffentlichungsnummer: **0 214 404 B1**

(12) **EUROPÄISCHE PATENTSCHRIFT**

(45) Veröffentlichungstag der Patentschrift: **06.03.91**

(51) Int. Cl.5: **A01C 15/04, B05B 1/26**

(21) Anmeldenummer: **86109590.9**

(22) Anmeldetag: **14.07.86**

(54) **Verteileinrichtung für Maschinen zum pneumatischen Ausbringen von körnigem Material.**

(30) Priorität: **14.08.85 DE 3529086**

(43) Veröffentlichungstag der Anmeldung:
**18.03.87 Patentblatt 87/12**

(45) Bekanntmachung des Hinweises auf die
Patenterteilung:
**06.03.91 Patentblatt 91/10**

(84) Benannte Vertragsstaaten:
**FR GB**

(56) Entgegenhaltungen:
| | |
|---|---|
| BE-A- 679 266 | BE-A- 679 266 |
| DE-B- 2 256 939 | FR-A- 1 602 344 |
| FR-A- 2 236 403 | FR-A- 2 490 450 |
| GB-A- 713 846 | US-A- 3 331 607 |

(73) Patentinhaber: **Amazonen-Werke H. Dreyer
GmbH & Co. KG
Am Amazonenwerk 9-13
W-4507 Hasbergen-Gaste(DE)**

(72) Erfinder: **Lücking, Johannes
Iburger Strasse 40
W-4506 Hagen T.W.(DE)**
Erfinder: **Schiemenz, Friedhelm
Frankensteiner Strasse 29
W-4507 Hasbergen(DE)**
Erfinder: **Hülsmann, Werner
Voxtruper Strasse
W-4500 Osnabrück(DE)**

## Beschreibung

Die Erfindung betrifft eine Verteilvorrichtung für Maschine zum pneumatischen Ausbringen von körnigem Material gemäß des Oberbegriffes des Patentanspruches I.

Eine derartige Verteilvorrichtung ist bereits durch die DE-OS 33 35 805 bekannt. Diese Verteilvorrichtung weist einen Krümmer auf, vor dem zumindest ein umsetzbares Prallelement mit zwei Prallkörpern angeordnet ist.

Durch eine Abkantung des Prallelementes entstehen die beiden Prallkörper. Hierbei sind die Prallkörper durch die Abkantung derart zueinander angeordnet, so daß der obere Prallkörper einen anderen Winkel zu dem Krümmer einschließt als der untere Prallkörper zu dem Krümmer. Hierdurch soll eine Vergleichmäßigung des Streufächers erreicht werden, so daß der Streufächer in sich symmetrisch ist. Nun hat es sich jedoch gezeigt, daß vor allem bei großen Ausbringmengen dieses Prallelement mit den beiden in einem Winkel zueinander angeordneten Prallkörper nachteilig ist, d.h. daß sich in dem Bereich, in dem sich der von dem oberen Prallkörper erzeugte Streufächer und der von dem unteren Prallkörper erzeugte Streufächer schneiden, sich Unregelmäßigkeiten im Streufächer ergeben, da die einzelnen Partikel dieser beiden Streufächer aufeinander treffen und somit sich gegenseitig unkontrolliert ablenken.

Der Erfindung liegt nun die Aufgabe zugrunde, die Ausbringung des von der Verteileinrichtung erzeugten Streufächers wesentlich zu vergleichmäßigen.

Diese Aufgabe wird erfindungsgemäß durch das Kennzeichen des Anspruches I gelöst. Infolge dieser Maßnahme werden zwei hintereinander anliegende Streufächer erzeugt, die sich nicht gegenseitig bei der Ausbildung der Streufächer behindern können, denn es werden zumindest zwei separate Streufächer erzeugt, die in zwei in einem Abstand hintereinanderliegenden aufrechten und quer zur Fahrtrichtung verlaufenden Ebenen erzeugt werden und zwar so, daß die Düngerpartikel im wesentlichen entweder gleichzeitig nach oben oder gleichzeitig nach unten abgelenkt werden. Hierbei wird zur Normaldüngung das aus dem unteren Querschnitt des Krümmers austretende Material von dem unteren und dem Krümmer am dichtesten zugeordneten Prallkörper nach unten abgelenkt. Das Material des oberen Querschnittes des Krümmers strömt über den unteren Prallkörper entlang und trifft dann auf den dahinter angeordneten Prallkörper, von dem es dann ebenfalls nach unten abgelenkt wird. Somit erzeugen die beiden Prallkörper jeweils einzelne und hintereinander liegende Streufächer. Hierbei sind die beiden Prallkörper dem Krümmer so zugeordnet, daß etwa auf jeden Prallkörper die gleiche Menge Material auftrifft.

Für die Normaldüngung wird man die Anordnung der Prallkörper in der vorbeschriebenen Weise wählen, während man für die Spätdüngung die Prallkörper der Verteileinrichtung so anordnen wird, daß die Streufächer sich nach oben ausbilden werden. Hierzu ist der obere Prallkörper dann am dichtesten zum Krümmer angeordnet und lenkt den oberen Teil des aus dem Krümmer herausströmenden Materialluftstromes nach oben ab. Die untere Hälfte des aus dem Krümmer herausströmenden Materialluftstromes strömt an dem oberen und am dichtesten zum Krümmer angeordneten Prallkörper vorbei und wird dann von dem unteren und hinter dem oberen Prallkörper angeordneten Prallkörpern nach oben hin abgelenkt.

Durch das Hintereinanderliegen der Streufächer wird erreicht, daß die Streufächer sich von jedem Einfluß unabhängig und ungestört ausbilden können. Hierbei ist von entscheidender Bedeutung, daß auch der aus dem Krümmer austretende und auf die Prallkörper auftreffende Materialluftstrom die Ausbildung des dem Krümmer am dichtesten liegenden Streufächers nicht behindert. Durch das gemeinsame Umsetzen der Prallkörper läßt sich die Maschine einfach von Normal- auf Spätdüngung umrüsten.

Durch die britische Patentschrift II 5I 448 ist eine Verteileinrichtung mit zwei hintereinander angeordneten Prallkörpern bekannt geworden. Diese Verteileinrichtung zur Einspritzung von Flüssigkeiten zur Verbrennung und von Ablaugen bei der Zelloloseherstellung vorgesehen. Mit den Prallplatten dieser Verteileinrichtung soll eine Flüssigkeit verteilt werden. Die der Spritzdüse am dichtesten zugeordnete Prallplatte weist in ihrer Mitte eine Öffnung auf, durch die ein Teil des Materiales hindurch auf die hintere Prallplatte strömen kann. Es werden also zwei hintereinanderliegende Spritzfächer bzw. zwei dünne Flüssigkeitsfilme erzeugt. Zum Verteilen von körnigem Material mittels eines Materialluftstromes eignet sich diese bekannte Verteileinrichtung jedoch nicht, da einerseits der Spritzfilm bzw. Flüssigkeitsfilm sich zu allen Seiten hin ausbreitet, während bei der gattungsgemäßen Vorrichtung sich der Streufächer nur zu einer Seite hin d.h. nach oben oder unten ausbreiten soll. Dieses bedeutet also, daß, wenn man die bekannte Verteilvorrichtung bei einer gattungsgemäßen Vorrichtung einsetzen würde, der aus der Spritzdüse herausströmende Flüssigkeitsstrom die Ausbildung des Streufächers auf der vorderen Prallplatte stören würde.

Damit sich die beiden Streufächer in keinem Falle in ihrer Ausbildung stören können bzw. miteinander sich schneiden, sind die hintereinander angeordneten Prallkörper in der Draufsicht gesehen zumindest annähernd parallel zueinander angeordnet.

In bevorzugter Weise ist vorgesehen, daß der dem unteren Bereich des Krümmers zugeordnete Prallkörper an seiner Oberseite anschließende Arme aufweist, und daß dieser Prallkörper mittels dieser Arme am Krümmer befestigt ist. Hierdurch wird eine einfache Befestigung des den am Krümmer am dichtesten zugeordneten Prallkörpers erreicht. Hierbei muß jedoch sicher gestellt sein, daß die Arme, die diesen Prallkörper an dem Krümmer befestigen, auf ihren einander zugewandten Seiten in einem derartigen Abstand angeordnet sind, daß sie nicht von dem aus dem Krümmer austretenden Materialluftstrom getroffen werden, andernfalls würden sie die Ausbildung des Streufächers behindern bzw. den Materialluftstrom nicht ungehindert zu dem hinteren prallkörper strömen lassen.

In einer bevorzugten Ausführungsform ist vorgesehen, daß die Prallkörper zu einer Baueinheit zusammengefaßt sind. Hierdurch ist es dann möglich, daß die beiden Prallkörper gemeinsam umsetzbar an dem Krümmer angeordnet sind. Hierdurch kann dann die Verteileinrichtung in einfacher Weise von der Normaldüngung für die Spätdüngung und umgekehrt in einfacher Weise umgerüstet werden. In einfacher Weise sind die prallkörper zur Normaldüngung auf der Oberseite und zur Spätdüngung auf der Unterseite des Krümmers anzuordnen.

Weitere Einzelheiten der Erfindung sind den übrigen Unteransprüchen der Beispielsbeschreibung und den Zeichnungen zu entnehmen. Hierbei zeigen

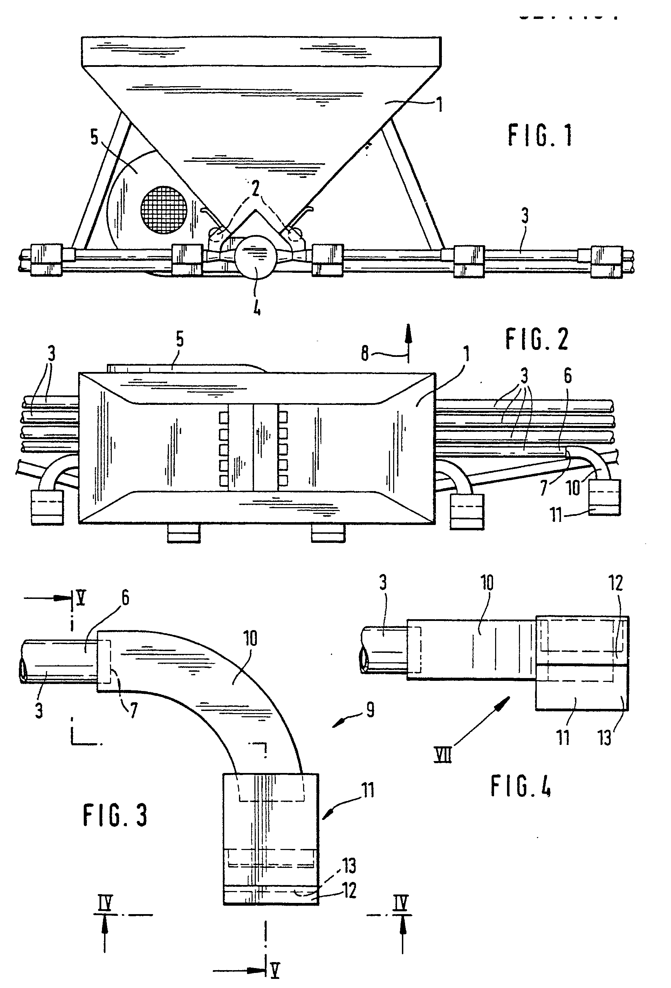

Fig. 1    einen pneumatischen Düngerstreuer, der mit den erfindungsgemäßen Verteileinrichtungen ausgerüstet ist, in der Ansicht von hinten,

Fig. 2    die Maschine gemäß Fig. 1 mit den erfindungsgemäßen Verteileinrichtungen in der Ansicht von oben,

Fig. 3    eine erfindungsgemäße Verteileinrichtung in der Ansicht von oben,

Fig. 4    eine erfindungsgemäße Verteileinrichtung in der Ansicht IV - IV, d.h. von hinten,

Fig. 5    die erfindungsgemäße Verteileinrichtung in der Ansicht V - V, d.h. in der Seitenansicht, wobei die Prallkörper in der Normaldüngungsstellung angeordnet sind,

Fig. 6    die Verteileinrichtung in der Darstellungsweise gemäß Fig. 5, wobei die Prallkörper in der Spätdüngungsstellung angeordnet sind,

Fig. 7    einen erfindungsgemäßen Prallkörper der Verteileinrichtung in perspektivischer Darstellung in der Ansicht gemäß dem Pfeil VII in Fig. 4, d.h. von schräg unten,

Fig. 8    ein Durchwirbelungselement, welches in den Rohrleitungen vor dem Krümmer angeordnet ist, in perspektivischer Darstellung,

Fig. 9    ein Leitelement welches in den Rohrleitungen vor den Krümmern angeordnet ist in Seitenansicht und

Fig. l0   das Leitelement gemäß Fig. 9 in der Draufsicht.

Die Maschine ist mit dem Vorratsbehälter I ausgestattet, aus dem das in ihm befindliche Material über den Dosiermechanismus 2 den Rohrleitungen 3 zugeführt wird, die am Luftführungskanal 4 des Gebläses 5 angeschlossen sind. Diese Rohrleitungen 3 weisen eine unterschiedliche Länge auf und sind an ihren äußeren Enden 6 mit je einer Ausströmöffnung 7 ausgestattet, wobei sich diese Ausströmöffnungen 7 in einem gleichmäßigen Abstand quer zur Fahrtrichtung 8 jeweils zueinander befinden. Ferner sind an diesen Enden 6 der Rohrleitungen 3 jeweils die Verteileinrichtungen 9 in bekannter und daher nicht dargestellter Weise angeordnet. Die Verteileinrichtungen 9 bestehen jeweils aus dem Krümmer l0 und den Prallelementen ll. Die Prallelemente ll sind jeweils entgegen der Fahrtrichtung schräg angestellt und befinden sich in nach unten geneigter Stellung.

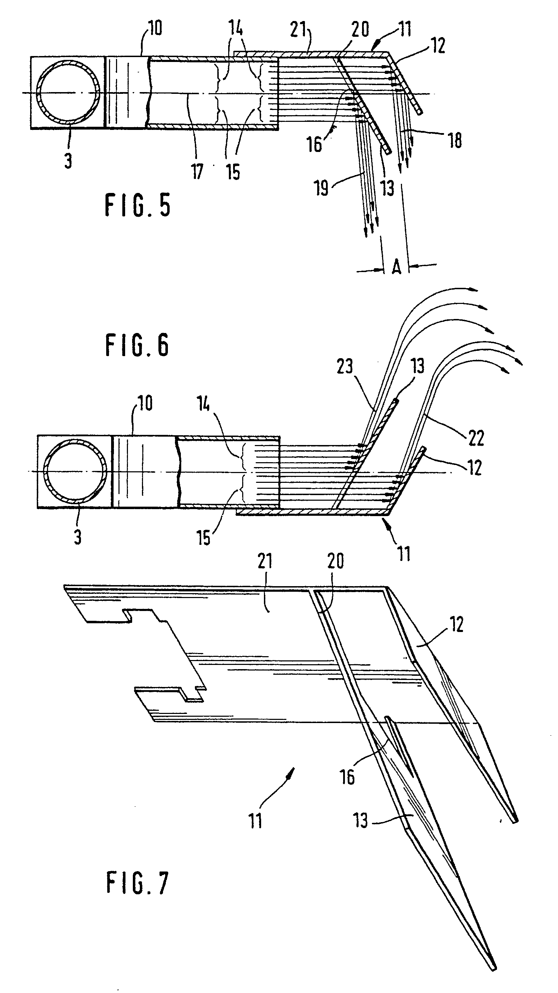

Jedes Prallelement ll besteht aus den beiden Prallkörpern l2 und l3. Die Prallkörper l2 und l3 sind in einem Abstand hintereinander angeordnet. In dem in den Fig. I bis 5 dargestellten Einsatzfall für die Normaldüngung sind die Prallelemente ll auf der Oberseite der Krümmer l0 in bekannter und daher nicht dargestellter Weise befestigt. Jeder Prallkörper l2 und l3 ist jeweils einem bestimmten Abschnitt des Krümmers l0 zugeordnet. Der dem oberen Teil l4, der dem oberen Flächenabschnitt des Krümmers l0 entspricht, zugeordnete Prallkörper l2 ist von dem Krümmer aus gesehen hinter dem dem unteren Teil l5, der dem unteren Flächenabschnitt des Krümmers l0 enspricht, zugeordneten Prallkörper l3 angeordnet. Die beiden Prallkörper l2 und l3 sind in der Draufsicht gesehen parallel zueinander angeordnet. Der von dem unteren Teil l4 bzw. dem unteren Flächenabschnitt des Krümmers l0 auf die Prallelemente ll zuströmenden Materialluftstromes wird von dem am dichtesten zum Krümmer angeordneten Prallkörper l3 in Richtung des Bodens abgelenkt. Die Oberkante l6 des Prallkörpers l3 liegt auf gleicher Höhe wie die mittlere Linie l7 des Krümmers 10. Der von dem oberen Teil l4 bzw. dem oberen Flächenquerschnitt des Krümmers auf die Prallelemente ll aufgeblasenen Materialluftstromes wird von dem Prallkörper l2 ebenfalls in Richtung des Bodens nach unten abgelenkt. Die beiden Prallkörper l2 und l3 erzeugen die zwei hintereinander liegenden separaten Streufächer l8 und l9. Diese beiden Streufächer l8 und l9 werden in zwei in einem Abstand A hintereinander liegenden aufrechten und quer zur Fahrtrichtung 8 verlaufenden Ebene erzeugt und zwar so, daß die Düngepartikel bei der Normaldüngung entsprechend Fig. 5 nur nach unten in Richtung des Bodens abgelenkt werden.

Die beiden Prallkörper l2 und l3 der Prallelemente ll sind zu einer Baueinheit zusammengefaßt. Der dem unteren Bereich des Krümmers l0 zugeordnete Prallkörper l3 weist an seiner Oberseite die beiden Arme 20 auf, mit denen er an dem abgewinkelten oberen Teil des Prallkörpers l2 befestigt ist. Der abgewinkelte Teil 2l des Prallkörpers l2 ist somit mit den Armen, die an dem unteren Prallkörper l3 angeordnet sind, verbunden. Weiterhin ist der abgewinkelte Teil 2l des Prallkörpers l2 in bekannter und daher nicht dargestellter Weise an dem Krümmer befestigt. Somit sind die Prallkörper l2 und l3 gemeinsam umsetzbar an dem Krümmer l0 befestigt, so daß die Prallelemente ll in der Normaldüngungsstellung entsprechend Fig. 5 an dem Krümmer l0 anzuordnen sind.

Durch Umsetzen der Prallelemente ll an dem Krümmer l0 in die in Fig. 6 dargestellte Position kann die Verteileinrichtung 9 für den Einsatz der Maschine für die Spätdüngung in einfacher Weise umgerüstet werden. Bei der Spätdüngung wird dann der Materialluftstrom des oberen Teiles l4 des Krümmers l0, welcher der oberen Hälfte des Flächenquerschnittes des Krümmers l0 entspricht, auf den Prallkörper l3 aufgeblasen, während der Materialluftstrom von dem unteren Teil l5 des Krümmers l0, welcher dem unteren Flächenquerschnitt des Krümmers l0 entspricht, auf den dahinter liegenden Prallkörper l2 aufgeblasen wird. Die auf die Prallkörper l2 und l3 aufgeblasenen Materialpartikel des Materialluftstromes werden nach oben abgelenkt, so daß die Streufächer 22 und 23 entstehen. Diese beiden separaten Streufächer 22 und 23 werden in zwei in einem Abstand hintereinander liegenden aufrechten und quer zur Fahrtrichtung verlaufenden Ebenen erzeugt und zwar so, daß die Düngerpartikel bei der Spätdüngung nach oben abgelenkt werden. Die Düngerpartikel der beiden Streufächer 22 und 23 fallen nach dem Ablenken nach oben in einer weichen Kurve, wie dieses in Fig. 6 angedeutet ist, von oben in den Getreidebestand hinein.

Bei dem Einsatz der Spätdüngung sind die Prallelemente ll auf der Unterseite des Krümmers l0, wie in Fig. 6 dargestellt, angeordnet.

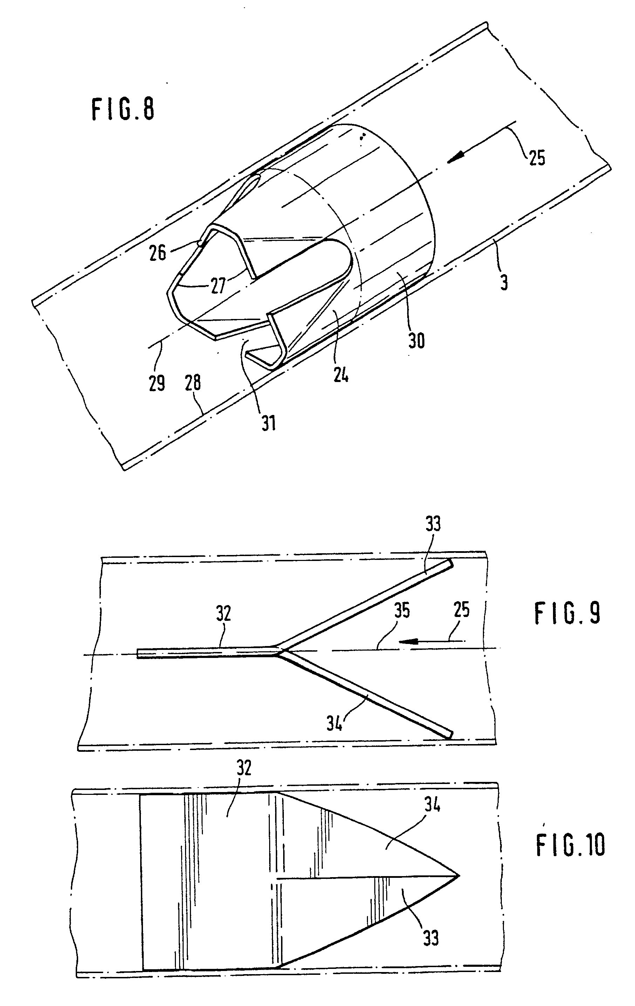

Um eine Vergleichmäßigung des Materialluftstromes vor dem. Auftreffen auf den Krümmer l0 sind in den Rohrleitungen 3, welche in Fig. 8 mit strichpunktierten Linien dargestellt sind, jeweils in einem kleinen Abstand vor den Ausströmöffnungen 7 die in Fig. 8 dargestellten Durchwirbelungselemente 24 angeordnet. Die Durchwirbelungselemente 24 ragen in den in Richtung des Pfeiles 25 geförderten Materialluftstromes hinein. Die Durchwirbelungselemente 24 sind als Einschubstücke ausgebildet. Die Durchwirbelungselemente 24 weisen jeweils mehrere Leitelemente 26 und 27 auf, die innerhalb der Rohrleitungen 3 auf der inneren Mantelfläche 28 der Rohrleitungen 3 verteilt angeordnet sind. Die Leitelemente 26 und 27 sind schräg angestellt in den Rohrleitungen 3 in bezug auf die Mittellinien 29 der Rohrleitungslängsachse 27 angebracht. Durch diese schräge Anstellung der Leitelemente 26 und 27 wird der Materialluftstrom teilweise etwas gebündelt und die einzelnen Materialpartikel des Materialluftstromes werden innerhalb des Luftstromes durcheinander gewirbelt. Die einander jeweils benachbarten Leitelemente 26 und 27 sind spiegelsymmetrisch zueinander angeordnet.

Die Durchwirbelungselemente 24 weisen den zylinderförmigen Mantel 30 auf, der an dem in Strömungsrichtung 25 des Materialluftstromes abgewandten Ende die Aussparungen 3l aufweist. Die Leitelemente 26 und 27 sind an den Aussparungen 3l in Richtung der Rohrleitungsmittellängsachse 27 abgebogen.

Die Fig. 9 und l0 zeigen ein anders ausgebildetes Leitelement 32, welches ebenfalls in einem Abstand vor den jeweiligen Ausströmöffnungen 7 der Rohrleitungen 3 anzuordnen ist um den Materialluftstrom zu vergleichmäßigen. Dieses Leitelement 32 weist in Strömungsrichtung 25 des Materialluftstromes gesehen in seinem vorderen Bereich aufrecht geteilte Leitflächen 33 und 34 auf. Die eine Leitfläche 33 des Leitelementes 32 verläuft von oben zur Leitungsmitte 35, während die andere Leitfläche des Leitelementes 32 von unten zur Rohrleitungsmitte 35 verläuft. Die Leitelemente 32 sind als gespreizte Bleche ausgebildet, wobei die eine Hälfte 33 des Bleches von der Rohrleitungsmitte aus nach oben und die andere Hälfte 34 des Bleches 32 von der Rohrleitungsmitte aus nach unten abgebogen ist. Durch die eine Hälfte 33 des Leitelementes 32 wird die obere Hälfte der Oberseite und zur Spätdüngung auf der Unterseite des des Materialluftstromes nach unten gedrückt, während die andere Hälfte 34 des Leitelementes 32 die Hälfte des unteren Teiles des Materialluftstromes zur Rohrleitungsmitte anhebt. Somit wird durch dieses Leitelement 32 eine Vergleichmäßigung des Materialluftstrmes über die Höhe des Querschnittes der Rohrleitung 3 gesehen erreicht.

Durch das Durchwirbelungselement 24 sowie durch das Leitelement 32, die jeweils innerhalb einer Rohrleitung 3 vor den Krümmern l0 angeordnet werden können, wird also erreicht, daß der sich teilweise innerhalb der Rohrleitungen entmischte Materialluftstrom vor dem Auftreffen auf den Krümmer l0 bzw. den Prallelementen ll wieder über den Flächenquerschnitt gesehen vergleichmäßigt wird. Somit wird also jeweils die gleiche Menge Material auf die Prallkörper l2 und l3 der Prallelemente ll aufgeblasen. Somit erzeugen die Prallkörper ll und l2 gleichmäßige Streufächer, so daß ein geleichmäßiges Streubild der nebeneinander angeordneten Verteilvorrichtungen 9 erreicht wird.

## Ansprüche

1. Verteilvorrichtung für Maschinen zum pneumatischen Ausbringen von körnigem Material, die an den mit je zumindest einer Ausströmöffnung (7) ausgestatteten äußeren Enden der quer zur Fahrtrichtung (8) verlaufenden mit dem Gebläse (5) der Maschine verbundenen Rohrleitungen (3) anschließbar ist und jeweils aus einem zumindest annähernd horizontal angeordnetem sowie mit seinem äußeren Ausströmende gegen oder in Fahrtrichtung (8) der Maschine weisenden Krümmer (l5) besteht, an dessen Ausströmende sich zumindest ein vorzugsweise umsetzbares, Prallelement (ll) befindet, das zumindest zwei Prallkörper (l2,l3) aufweist, auf die das von dem Krümmer (l0) umgelenkte Material aufblasbar ist, um zumindest zwei Streufächer (l8,l9,22,23) zu erzeugen, wobei jeweils jeder Prallkörper (l2,l3) einem bestimmten Abschnitt (l4,l5) des Querschnittes des Krümmers (l0) zugeordnet ist, daß sich jeweils der dem oberen Teil (l4) des Querschnittes des Krümmers (l0) zugeordnete Prallkörper (l2,l3) von dem Krümmer (l0) aus in Richtung des austretenden Materialstroms gesehen hinter dem dem unteren Teil (l5) des Querschnittes des Krümmers (l0) zugeordneten Prallkörper (l2,l3) oder sich jeweils der dem unteren Teil (l5) des Querschnittes des Krümmers (l0) zugeordneten Prallkörper (l2,l3) von dem Krümmer (l0) aus in Richtung des austretenden Materialstroms gesehen hinter dem oberen Teil (l4) des Querschnittes des Krümmers (l0) zugeordneten Prallkörper (l2,l3) befindet, dadurch gekennzeichnet, daß die Oberkante des am dichtesten zum Krümmer (l0) angeordneten und dem unteren Teil (l5) des Querschnittes des Krümmers (l0) zugeordneten Prallkörpers (l2,l3) auf gleicher Höhe wie die mittlere Linie (l7) des Krümmers (l0) liegt, oder die Unterkante (l6) des am dichtesten zum Krümmer (l0) angeordneten und dem oberen Teil (l4) des Querschnittes des Krümmers (l0) zugeordneten Prallkörpers (l2,l3) auf gleicher Höhe wie die mittlere Linie (l7) des Krümmers (l0) liegt.

2. Verteileinrichtung nach Anspruch l, dadurch gekennzeichnet, daß die Prallkörper (l2,l3) mittels zwischen ihnen angeordneter Arme (20) zu einer Baueinheit zusammengefaßt sind.

3. Verteileinrichtung nach Anspruch l, dadurch gekennzeichnet, daß der dem oberen Bereich (l4) des Krümmers (l0) zugeordnete Prallkörper (l2) an seiner Oberseite abgewinkelt ist, und daß der abgewinkelte Teil (2l) des Prallkörpers (l2) mit den Armen (20) des unteren Prallkörpers (l3) verbunden ist.

## Claims

1. Dispersion arrangement for machines for pneumatically distributing particulate material, which arrangement is connectable to the outer ends of the conduits (3), which are each provided with at least one discharge aperture (7) and which extend transversely relative to the direction of travel (8) and are connected to the fan (5) of the machine, and said arrangement includes a bend portion ( ), which is disposed at least approximately horizontally and points with its outer discharge end in a direction opposite to the direction of travel (8), or in the direction of travel, of the machine, at least one baffle means (11) being situated at the discharge end of said bend, the baffle means being preferably exchangeable and having at least two baffle members (12, 13), onto which the material guided by the bend (10) can be blown, in order to produce at least two dispersion branches (18, 19, 22, 23), each baffle member (12, 13) being associated with one specific portion (14, 15) of the cross-section of the bend (10), in that, when viewed from the bend (10) in the direction of the outgoing flow of material, the particular baffle member (12, 13) associated wth the upper portion (14) of the cross-section of the bend (10) is situated behind the baffle member (12, 13) associated with the lower portion (15) of the cross-section of the bend (10), or, when viewed from the bend (10) in the direction of the outgoing flow of material, the particular baffle member (12, 13) associated with the lower portion (15) of the cross-section of the bend (10) is situated behind the baffle member (12, 13) associated with the upper portion (14) of the cross-section of the bend (10), characterised in that the upper edge of the baffle member (12, 13), which is disposed the nearest to the bend (100 and is associated with the lower portion (15) of the cross-section of the bend (10), lies at the same level as the central line (17) of the bend (10), or the lower edge (16) of the baffle member (12, 13), which is disposed the nearest to the bend (10) and is associated with the upper portion (14) of the cross-section of the bend (10), lies at the same level as the central line (17) of the bend (10).

2. Dispersion arrangement according to claim 1, characterised in that the baffle members (12, 13) are combined to form one structural unit by means of arms (20) disposed between said baffle members.

3. Dispersion arrangement according to claim 1, characterised in that the baffle member (12), which is associated with the upper portion (14) of the bend (10), is bent-over at its upper end, and in that the bent-over portion (21) of the baffle member (12) is connected to the arms (20) of the lower baffle member (13).

**Revendications**

1. Distributeur pour épandeur pneumatique de granulés ou produits en grains susceptible d'être relié à l'extrémité extérieure chaque fois munie d'un orifice de sortie (7) de conduites (3) dirigées transversalement à la direction de déplacement (8) et qui sont reliées à la machine soufflante (5) de la machine (distributeur) et se composent chaque fois d'un coude disposé au moins approximativement horizontalement ainsi dirigé avec son extrémité de sortie extérieure dans le sens de déplacement (8) ou contre le sens de déplacement de l'épandeur et dont l'extrémité de sortie comporte au moins un élément de rebondissement (11) de préférence réversible qui comprend au moins deux organes de rebondissement (12, 13) sur lesquels on peut souffler la matière déviée par le coude (10) pour créer au moins deux éventails de distribution (18, 19, 22, 23), à chaque organe de rebondissement (12, 13) est associé un segment déterminé (14, 15) de la section du coude (10) de façon que l'organe de rebondissement (12, 13) associé à la partie supérieure (14) de la section du coude (10) se trouve derrière, dans le sens du flux de matière, vu du coude, par rapport à l'organe de rebondissement (12, 13) associé à la partie inférieure (15) de la section du coude (10) ou encore que l'organe de rebondissement (12, 13) associé respectivement à la partie inférieure (15) de la section du coude (10) se trouve, vu du coude (10), dans la direction du flux de matière sortant, derrière la partie supérieure (14) de l'organe de rebondissement (12, 13) associée à la partie supérieure (14) de la section du coude (10), distributeur caractérisé en ce que l'arête supérieure de l'organe de rebondissement (12, 13) le plus proche du coude (10) et associé à la partie inférieure (15) de la section du coude (10) se trouve à la même hauteur que la ligne médiane (17) du coude (10) ou que l'arête inférieure (16) de l'organe de rebondissement (12, 13) située le plus près du coude (10) et associée à la partie supérieure (14) de la section du coude (10) se trouve à la même hauteur que la ligne médiane (17) du coude (10).

2. Distributeur selon la revendication 1, caractérisé en ce que les organes de rebondissement (12, 13) sont réunis en un ensemble avec les bras (20) prévus entre eux.

3. Distributeur selon la revendication 1, caractérisé en ce que l'organe de rebondissement (12) associé à la zone supérieure (14) du coude (10) est recourbé à son côté supérieur et en ce que la partie recourbée (21) de l'organe de rebondissement (12) est reliée aux bras (20) de l'organe de rebondissement inférieur (13).

FIG. 1

FIG. 2

FIG. 3

FIG. 4

FIG.5

FIG.6

FIG.7

FIG.8

26
27
29  28
31
25
3
30
24

33
32  35  25
34
FIG.9

32
34
33
FIG.10